# EUROPÄISCHE PATENTSCHRIFT

(11) **EP 0 644 331 B1**
(45) Veröffentlichungstag und Bekanntmachung des Hinweises auf die Patenterteilung: **12.11.1997**
(21) Anmeldenummer: 93810673.9
(22) Anmeldetag: 22.09.1993
(51) Int. Cl.: F03B 15/16

(54) **Verfahren zur Optimierung des Wirkungsgrades einer Wasserturbine**
Method of efficiency optimisation for a water turbine
Procédé pour optimaliser l'efficacité d'une turbine à eau

(43) Veröffentlichungstag der Anmeldung: 22.03.1995
(73) Patentinhaber: Sulzer Hydro AG, 8023 Zürich (CH)
(72) Erfinder: Erlach, Josef, D-88213 Ravensburg (DE); Meier, Christian, CH-8103 Unterengstringen (CH)
(74) Vertreter: Trieblnig, Adolf

(56) Entgegenhaltungen:
- EP-A- 0 519 530
- CH-A- 350 622
- DE-A- 3 601 289
- DE-A- 4 124 498
- DE-C- 935 540
- GB-A- 1 228 445
- US-A- 4 794 544
- DIE WASSERWIRTSCHAFT Nr. 4 , Januar 1954 , STUTTGART Seiten 104 - 105 A.LIST 'Vereinfachtes Verfahreb zum Einstellen der Kaplanturbinen auf besten wirkungsgrad'
- DATABASE INSPEC/EPO XU ZHIDE 'Research into a single chip Mu C-based optimizing controller for Kaplan turbines' & DATABASE INSPEC INSTITUTE OF ELECTRICAL ENGINEERS, STEVENAGE, GB Inspec No. .4235581

## Beschreibung

Die Erfindung handelt von einem Verfahren zur Optimierung des Wirkungsgrades einer Wasserturbine, welche einen Leitapparat mit verstellbaren Leitschaufeln und ein mit einem elektrischen Generator gekoppeltes Laufrad mit verstellbaren Lauf schaufeln aufweist, um im Betrieb der Wasserturbine bei gegebener Fallhöhe H mit den Leitschaufeln und Laufradschaufeln einen passenden Wasserstrom Q einzustellen.

Von Wasserturbinen wird gefordert, aus einem Wasserstrom bestimmter, möglicherweise unterschiedlicher Fallhöhe mittels eines Generators elektrische Energie mit optimalem Wirkungsgrad zu gewinnen. Dazu ist es erforderlich, die Betriebsparameter der Wasserturbine, insbesondere die Stellung der Leitschaufeln des Leitapparates sowie der Laufschaufeln auf die gegebenen Betriebsverhältnisse und aufeinander so abzustimmen, dass sich der grösstmögliche Wirkungsgrad der Energieumwandlung ergibt.

In Anlagen mit mehreren Turbinen, die insbesondere auch geometrisch gleich sein können, können diese Betriebsparameter untereinander unterschiedlich sein. Der hauptsächliche Grund für solche Abweichungen liegt in der nicht idealen und nicht modellähnlichen Zuströmung. Diese einerseits von Turbine zu Turbine, andererseits auch für eine Turbine bei unterschiedlichen Einsatzbedingungen, sich verändernde Zuströmung kann dazu führen, dass sich die Betriebsparameter ändern und dass sich eine abweichende beste Zuordnung ergeben kann. Diese Abhängigkeit der Betriebsparameter von der Zuströmung ist umso grösser, je kleiner die verarbeitete Fallhöhe und somit die strömungsführende Einlaufstrecke bis zum Leitapparat ist, auf der sich Störungen wieder ausgleichen können.

Die Zuströmung kann in Kraftwerken auch in einem Masse vom Idealzustand abweichen, dass sich bewährte Verfahren zur Bestimmung der Betriebsparameter nicht oder nur beschränkt einsetzen lassen. Dies ist darauf zurückzuführen, dass bei einer nicht idealen Zuströmung Ablösungen an Bauteilen auftreten können, die für eine ideale Strömungsführung konstruiert wurden. Diese Ablösungen machen sich auf die Strömung in der Turbine dadurch bemerkbar, dass aus der Ablösezone sogenannte Karman'sch Wirbelstrassen abgehen, die zu einer zeitlich und örtlich ändernden Geschwindigkeitsverteilung führen, und dass sich für Betrieb und Messung schwierig zu handhabende instationäre Zustände einstellen.

In einem Artikel von Anton List "Vereinfachtes Verfahren zum Einstellen der Kaplanturbinen auf besten Wirkungsgrad" (Die Wasserwirtschaft (44), 1954(4)) wird mindestens eine exakte relative Messung des Wasserstroms vorausgesetzt. Bei jedem Versuch wird der Laufschaufelwinkel ϕ beliebig eingestellt und die Leitradschaufelöffnung aₒ so lange vergrössert oder verkleinert bis sich der für die Messreihe festgelegte Wasserstrom einstellt und ein Beharrungszustand eingetreten ist. Dann wird der Generator auf cos (ϕ) = 1 gebracht und die Generatorleistung abgelesen. Die Maxima der Generatorleistungen bei den als gleich gemessenen Wassermengen ergeben jeweils Betriebspunkte mit optimalem Wirkungsgrad. Schwankungen in der Fallhöhe gehen mit einem Korrekturfaktor (Fallhöhenverhältnis) 3/2 in die Leistungsmessung ein.

Dieses Verfahren hat den Nachteil, dass es über den ganzen Messbereich mindestens exakte relative Messungen des Wasserstroms voraussetzt, was in den seltensten Fällen gegeben ist. Im weiteren besteht in der Regel durch die Wasseranlage, in der die Turbine eingebaut ist, eine Abhängigkeit zwischen Fallhöhe und Wasserstrom, die es nur in zeitlich weit auseinanderliegenden Situationen gestattet, für eine konstante Fallhöhe, die sich aus dem Zustand von Oberwasser und Unterwasser ergibt, stark unterschiedliche Wasserströme zu messen. Allein der Zeitunterschied mit der Möglichkeit von Verschmutzung und Verstellung des Mess-Systems für die Mengenmessung beeinträchtigt die Genauigkeit einer solchen Optimierung. Ein weiterer Nachteil besteht darin, dass die Punkte eines zu messenden konstanten Wasserstromes immer aus Bereichen mit kleinerem oder grösserem Wasserstrom angefahren werden, sodass Strömungsformen, die sich bei kleineren oder grösseren Wasserströmen am Einlauf ausbilden, mit einer bestimmten Trägheit erhalten bleiben und das Messergebnis auch bei grossen Beharrungszeiten in Frage stellen.

Bekannte automatisierte oder geregelte Verfahren zur Optimierung der Betriebsparameter, wie beispielsweise in DE-PS 935 540 beschrieben oder basierend auf der Auswertung von niederfrequenten Pendelungen gemäss der Patentschrift DE 41 24 498 erbringen in Anwendungen mit instationären, auf schlechte Zuströmung zurückzuführenden Betriebszuständen ungenaue oder falsche Resultate, worauf in der DIN 1952 (8.71) hingewiesen wird.

In der US 4,794,544 wird ein Messverfahren beschrieben, bei dem die optimale Zuordnung der Verstellwinkel für Leitschaufeln und Laufradschaufeln auf Messungen des Wasserstroms und der damit berechneten Wirkungsgrade beruht. Die so ermittelten Werte sind daher mit den Unsicherheiten der verschiedenen Messverfahren bei der Ermittlung des exakten Wasserstroms in einer Turbine behaftet.

In der DE 36 01 289 wird eine Drehzahlregelung beschrieben, die von einer bereits vorhandenen und durch Wirkungsgradbestimmung optimierten Zuordnungen von Schaufelstellungen der Lauf- und Leiträder ausgeht und die die damit verknüpften Drehzahlen als Sollwerte bei bestimmten Fallhöhen und Leistungsvorgaben einsetzt.

In der GB 1 228 445 wird eine Optimierung vorgeschlagen, bei der ebenfalls die relativ unsichere Messung des Wasserstroms dazu verwendet wird, um bei einer ersten festgehaltenen Schaufelstellung und bei konstanter Leistung variierten zweiten Schaufelstellung den Punkt mit dem geringsten Wasserstrom als Optimum zu ermitteln.

Diesen Umständen soll die Erfindung abhelfen. Sie hat die Aufgabe für bestimmte Fallhöhen bei doppelt regulierten Wasserturbinen, den Wirkungsgrad zu optimieren. Diese Aufgabe wird mit den Kennzeichen des Verfahrens nach Anspruch 1 gelöst,
- indem in einem 1. Schritt ausgehend von einem Betriebspunkt Al einer H₁ = Constant Linie, dem durch die Zuordnung der Stellung von Laufschaufeln und Leitschaufeln ein bestimmter Wasserstrom Q₁ entspricht, ein Startpunkt B1 für die gleiche Fallhöhe H₁ und einen annähernd konstanten Wasserstrom Q₁ angefahren wird, indem auf einer Eingriffslinie quer zur H₁ = Constant Linie gleichzeitig eine Verkleinerung der Leitschaufelstellung und eine Vergrösserung der Laufschaufelstellung, welche in Verstellprozenten des Verstellbereiches das 1- bis 0,7-fache der Verstellprozente der Leitschaufeln ausmacht, vorgenommen wird, bis eine Verkleinerung um bis zu 10 % des Verstellbereichs der Leitschaufeln erreicht ist, um dort nach einer Beharrungszeit, die vom Generator aufgenommene Leistung P zu messen und zu speichern,
- indem in einem 2. Schritt und weiteren Folgeschritten die Eingriffslinie in entgegengesetzter Richtung durchlaufen wird, wobei nach jedem für Leitrad und Laufrad gemeinsamen Verstellschritt in der Grösse von etwa 3 % des Verstellbereiches nach einer Beharrungszeit von etwa 3 Minuten die vom Generator aufgenommene Leistung P gemessen und gespeichert wird, bis über den ursprünglichen Betriebspunkt A1 hinaus eine Vergrösserung um bis zu 10 % des Verstellbereichs der Leitschaufeln erreicht ist,
- indem in einem Auswerteschritt die gemessenen Leistungen verglichen werden, um diejenige Kombination von Leitschaufelstellung und Laufschaufelstellung zu bestimmen, bei der die grösste Leistung P an den Generator abgegeben wurde, und um diese Kombination als optimierten Punkt A_{1'} einer neuen H_{1'} = Constant-Linie mit verbessertem Wirkungsgrad zuzuordnen,
- indem in einem späteren Schritt die neue Kombination der Schaufelstellungen vom optimierten Punkt A_{1'} als Regelvorgabe für das gleichzeitige Verstellen von Leitschaufeln und Laufschaufeln beim Abfahren einer verbesserten H_{1'} = Constant-Linie verwendet wird.

Das Verfahren hat den Vorteil, dass zur Optimierung auf eine eigentliche Messung des Wasserstromes mit den zugehörigen Unsicherheiten und mit dem zugehörigen Aufwand verzichtet werden kann. Ein weiterer Vorteil besteht darin, dass die Messung der Leistungen auf einer Eingriffslinie mit annähernd konstantem Wasserstrom erfolgt, sodass von der Turbine während der Messungen keine Rückwirkungen auf die Fallhöhe entstehen und ausserdem konstante Verhältnisse am Einlauf erhalten bleiben. Die Beharrungs- und Messzeiten sind so kurz, dass die Optimierung eines Punktes einer H = Constant Linie in einer Viertelstunde erfolgen kann. Die Messung selbst kann während des normalen Betriebes der Turbine ohne wesentliche Leistungsverluste vorgenommen werden. Da das Verfahren automatisierungsfreundlich ist und bei einem einmal installierten Programm keine Vorbereitungen zur Messung an der Anlage notwendig sind, kann immer dann die Optimierung eines Punktes H/Q in einem Betriebsbereich ausgelöst werden, wenn die Turbine wegen der äusseren Umstände in diesem Bereich gefahren werden muss. Bei einem solchen adaptiven Vorgehen entstehen durch die Messung kaum Verluste, während die aktuellen Einlaufbedingungen berücksichtigt werden. Weitere vorteilhafte Ausführungen des Verfahrens ergeben sich aus den abhängigen Ansprüchen 2 bis 12.

Erfindungsgemäss wird in dem Verfahren versucht, den Schwierigkeiten der Messung des zeitlich schwankenden Mess-Signales für den Wasserstrom dadurch zu begegnen, dass man durch geeignete Steuerung der Turbine die Grösse des durch die Turbine fliessenden Wasserstromes bewusst voreinstellt, so dass während den Messungen diese Grösse nur noch zur Kontrolle mitgemessen werden kann. Messpunkte können genau dann untereinander zur Auswertung verglichen werden, wenn sich die so gesteuerte Wassermenge in gewissen Toleranzen von Messpunkt zu Messpunkt als konstant erweist. Geschieht die Verstellung von Laufschaufeln und Leitapparat gleichzeitig in genau demjenigen gegenseitigen Verhältnis, dass keine Drosselung oder Erhöhung des durch die Wasserturbine verarbeiteten Wasserstromes auftritt, so ist die vom Generator abgehende Leistung direkt proportional zum Wirkungsgrad der Turbine im jeweiligen Messpunkt und repräsentativ zur Ermittlung des besten Wirkungsgrades.

Im folgenden wird die Erfindung anhand von Zeichnungen erläutert. Es zeigen:
- Fig. 1: Ein prinzipielles Diagramm für vorgegebene Kombinationen von Leitschaufel- und Laufradschaufelstellungen bei verschiedenen konstanten Fallhöhen;
- Fig. 2: einen Ausschnitt aus Fig. 1, in welchem einzelne Schritte einer Messung längs einer Eingriffslinie, die eine Q = Constant-Linie annähert, aufgezeigt sind.
- Fig. 3: eine Darstellung der Leistungen, die an den Generator in den Messpunkten der Fig. 2 abgegeben werden;
- Fig. 4: eine prinzipielle Darstellung der Schnellermittlung eines Optimums, wobei über der Zeit die Verstellprozente von Leitschaufeln und Laufradschaufeln für eine Q ≈ Constant-Linie und die zugehörige Leistungsabgabe aufgezeichnet sind;
- Fig. 5: eine prinzipielle Darstellung der gemessenen Leistungsabgabe für eine konstante Fallhöhe, bei der die 100 % der Leitschaufelverstellung erreicht sind und nur noch eine Vergrösserung der Laufradschaufelstellung stattfindet; und
- Fig. 6: schematisch die Draufsicht auf ein Wehr mit einer unterschiedlichen Anströmung am Einlauf zweier benachbarter Turbinen.

Dem Verfahren liegt einmal der Gedanke zugrunde, bei einem Wechsel der Einlaufbedingungen ein neues Optimum als Regelvorgabe für Leit- und Laufradschaufeln zu bestimmen und zum anderen durch die Konstruktion einer Q = Constant-Linie in einem zu optimierenden Betriebspunkt auf eine unsichere Messung des Wasserstroms Q zu verzichten, weil die Vorteile für eine Messung entlang einer Q ≈ Constant-Linie den systematischen Nachteil, dass die ermittelte maximale Leistung nicht einem exakt bekannten Wasserstrom Q zugeordnet werden kann, überwiegen. In diesem Sinn wird der Wirkungsgrad η auf sein Optimum gebracht, ohne den exakten Wert dieses Optimums zu kennen, jedoch wegen der Zuordnung von Leitschaufel- und Laufschaufelstellung in einer reproduzierbaren Art. Ein auf diese Weise optimierter Betriebspunkt kann sofort als Stützpunkt für die Korrektur einer H = Constant-Linie verwendet werden und als Regelkriterium gelten. Er kann aber auch später im Linienzug mit Stützwerten von mehreren optimierten Betriebspunkten einer H = Constant-Linie zur Regelvorgabe dienen. Es kann somit in dem von den äusseren Umständen bestimmten Betriebsbereich ein Netz von Stützwerten für eine optimierte Interpolation von dazwischenliegenden H = Constant-Linien gebildet werden.

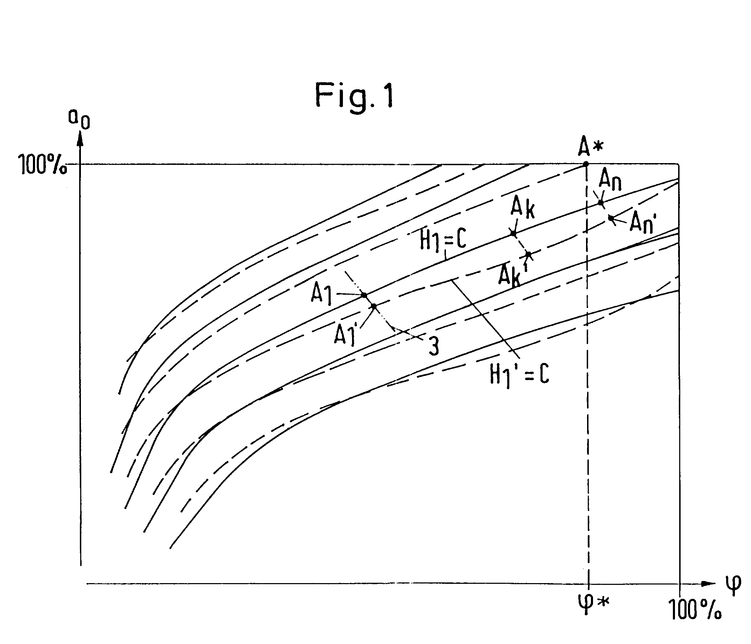

In Fig. 1 sind Linien konstanter Fallhöhe H als Kennlinien aufgetragen, entlang denen der Eingriff der Leitschaufelstellung in % von aₒ und der Laufradstellung in % von ϕ aufgetragen ist. Bei einem vorläufigen Betriebspunkt A₁ der Fallhöhe H₁ = Constant wird eine Eingriffslinie 3 konstruiert, deren Neigung einem konstanten Wasserstrom Q₁ auf einer Q₁ = Constant-Linie durch den Punkt A₁ entsprechen soll.

Aus der Praxis im hydraulischen Maschinenbau ist dem Spezialisten bekannt, wie sich im Kennfeld der Betriebsparameter die Punkte aneinanderreihen, die bei einer bestimmten Fallhöhe jeweils dieselbe Wassermenge durch die Turbine leiten. Diese Punkte ergeben zusammen aufgetragen einen Linienzug, die Q = Constant-Linie.

Für die Durchführung der Messung, für die Auswertung der Messung und für die Vorgabe von neuen, optimierten Betriebspunkten an die Regelung ist der Einsatz eines programmierbaren Rechners mit einer elektronischen Steuerung sinnvoll. Darin lässt sich die Steilheit einer konstruierten Q = constant Eingriffslinie in einem aₒ/ϕ -Diagramm relativ einfach einprogrammieren, indem in Prozenten der Verstellbereiche ausgedrückt die Laufradschaufelstellung etwa dem 1- bis 0,7-fachen der Leitschaufelverstellung entspricht, wobei im Bereich von grösseren Leitschaufelstellungen als Laufradschaufelstellungen dieser Faktor sich gegen 0,7 und in Extremfällen, bei grossen Leitschaufelstellungen und kleinen Laufradschaufelstellungen, zu noch kleineren Werten verschieben kann.

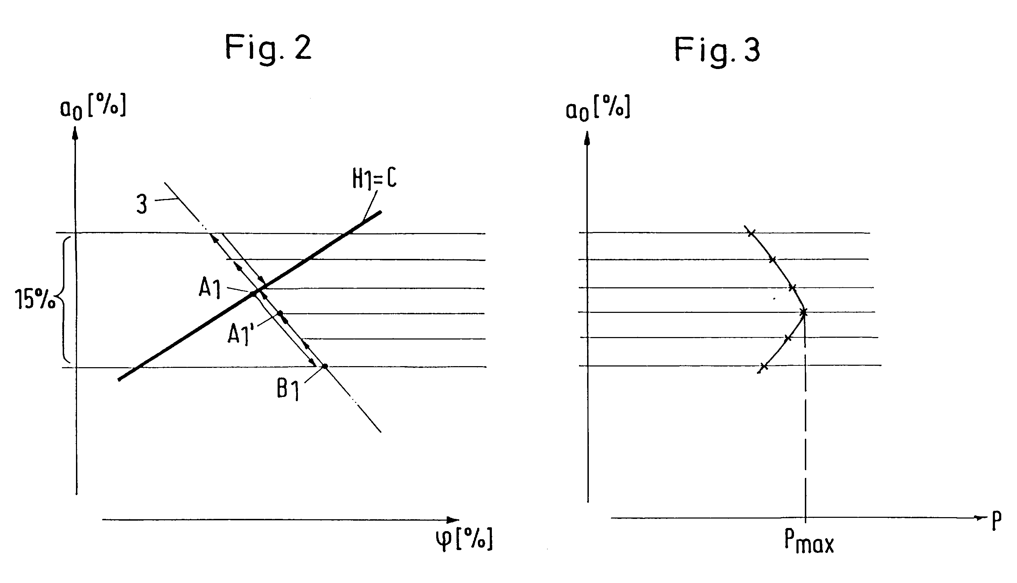

In Fig. 2 wird entlang der Eingriffslinie 3 die Leitschaufelstellung verkleinert und die Laufschaufelstellung vergrössert, um einen Startpunkt B₁ für die Messungen der an den Generator abgegebenen Leistung P, die in Fig. 3 dargestellt wird, anzufahren. Aus dem Startpunkt B₁ wird in einzelnen Schritten, die etwa 3 % der Leitradöffnung aₒ entsprechen, eine Bandbreite von 15 % abgefahren und nach einer Beharrungszeit unter 3 Minuten am jeweiligen Punkt die abgegebene Leistung P gemessen und gespeichert.

Der Punkt mit der grössten Leistung Pₘₐₓ innerhalb der abgefahrenen Bandbreite entspricht einem Punkt mit dem besten Wirkungsgrad und wird zum neuen, optimierten Betriebspunkt A₁' gemacht. In Fig. 1 ist eine optimierte H₁' = Constant-Linie mit den Punkten A₁', Aₖ', Aₙ' strichliert dargestellt und eine ganze Kurvenschar von H' = Constant-Linien.

Das mittels einer geeigneten elektronischen Steuerung durchgeführte Messverfahren ist mit den benötigten Daten programmiert, so dass diese Linien selbständig abgefahren werden können. Die mitlaufend ausgewertete Generatorleistung zeigt an der Stelle, wo ihr Maximum auftritt, auf den für die herrschenden Bedingungen besten Zuordnungspunkt von Leitapparat und Laufrad. Treten während der Dauer der Messung an der Turbine Fallhöhenschwankungen auf, so kann die Generatorleistung auf eine Referenzfallhöhe umgerechnet werden, um die Messungen untereinander zu vergleichen.

Voraussetzung ist ein Betrieb mit nicht dauernd verändertem Blindleistungsanteil, oder wenn dies nicht gewährleistet werden kann, ein Einbezug des blindleistungsbedingten Abfalls des Generator-Wirkungsgrades analog der fallhöhen-korrigierten Generatorleistung.

Das Verfahren lässt sich einerseits zur Messung oder vorzugsweise als betriebliche Einrichtung zur periodisch wie auch andererseits ereignisgesteuert durchgeführten adaptiven Anpassung dieser Zuordnung einsetzen. Das Verfahren stützt sich auf die digitale Regelelektronik ab, denn zusätzlich zur "elektronischen Kurvenwalze" müssen im Turbinenregler selbst oder in einem auf die Positionierkreise des Turbinenreglers eingreifenden Zusatzregler die Linien gleicher Wassermenge (Q = Constant-Linien) einprogrammiert werden können. Dieser Regler benötigt das Wirkleistungssignal des Generators mit einer hohen Signaltreue, die Signale von Fallhöhe, Leistungsfaktor cos (ϕ), der Leitapparat- und der Laufradstellung. Zusätzliche Signale dienen der Ereignissteuerung, das heisst der Erkennung von Bedingungen, die ein Nachoptimieren notwendig machen. Die Zuströmung bzw. eine allfällige Aenderung können beispielsweise durch Mitüberwachen der Schluckmenge von benachbarten Organen wie weiteren Turbinen oder Wehrfeldern erkannt werden.

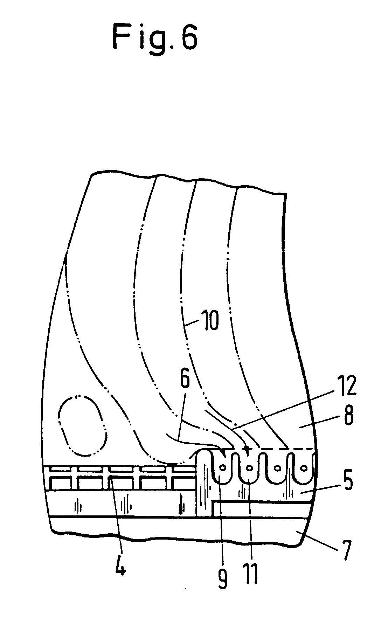

Fig. 6 zeigt eine Staustufe mit Wehr 4, Oberwasser 8 und Unterwasser 7 sowie vier Maschinensätzen 5. Die eingetragenen Stromlinien 10 entsprechen einer bestimmten Abflusskonstellation und sind für die einzelnen Turbinen unterschiedlich. Besonders die beim Wehr stehenden Turbinen 9 und 11 weisen einerseits voneinander und andererseits je nach Abflusskonstellation variierende Strömungsverhältnisse auf, die zu anderen Zuordnungen von Leitapparatstellung zu Laufradstellung führen. Ein Kriterium für ändernde Verhältnisse der Zuströmung sind die jeweiligen Schluckmengen der zur betrachteten Turbinen benachbarten Organe. Diese Schluckmengen werden als Signale dem beschriebenen Regler zugeführt.

An der Optimierung beteiligt sind nicht nur die hier explizit aufgezählten Signale, sondern alle sinngemäss benutzten oder generierten Signale, die das Abweichen des Wirkungsgrades von seinem Optimum erkennen lassen, und insbesondere alle Verfahren, die Veränderungen der Zuströmung als Hauptursache für Zuordnungsänderungen von Laufrad und Leitapparat messen und zur Verbesserung des Betriebs der Turbine ausnutzen, sei es mit elektrischen, elektronischen, mechanischen oder hydraulischen Mess- und Regeleinrichtungen.

Weitere Steuer- und Ueberwachungs-Signale dienen dazu, Fremdeingriffe auf die Turbinenstellung während der Dauer des Nachoptimierens zu unterbinden, Optimierungsvorgänge gegebenenfalls abzubrechen oder extern auszulösen.

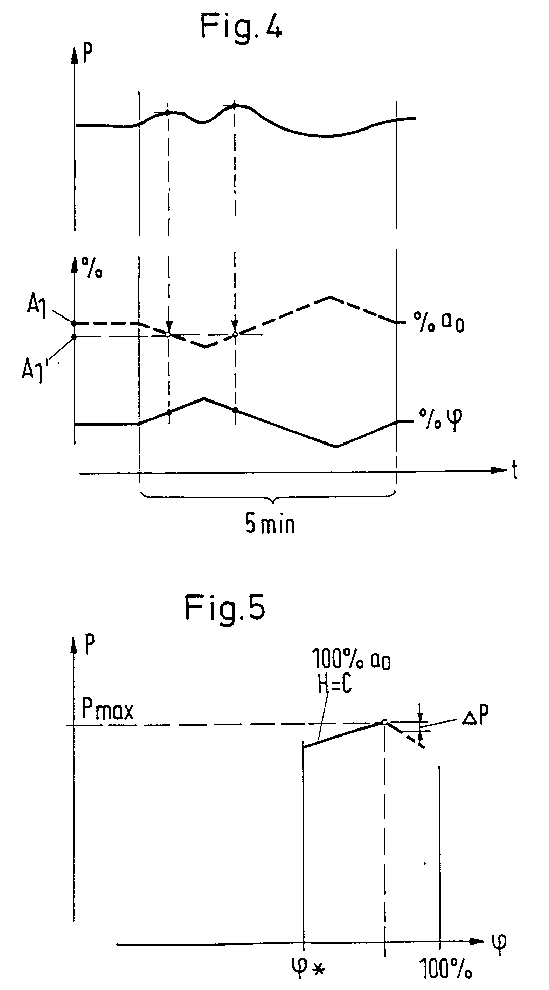

In Fig. 4 ist über der Zeit der Ablauf für ein Schnellverfahren gezeigt, bei dem die ungefähre Lage eines Optimums ermittelt wird. Die Messpunkte wie sie in Fig. 2 und 3 gezeigt sind, werden kontinuierlich mit konstanter Verstellgeschwindigkeit angefahren und ohne Beharrungszeit durchfahren, sodass der ursprüngliche Betriebspunkt A₁ nach einer Durchlaufzeit von 5 Minuten wieder erreicht ist. Gleichzeitig wird das Signal der Leistung extrem tiefpass-gefiltert und gemessen und mit den zugehörigen Schaufelstellungen gespeichert, um die Schaufelstellungen mit der grössten abgegebenen Leistung zu ermitteln.

Eine Ergänzung der Optimierung wird in Fig. 5 gezeigt. Sie gilt für H = Constant-Linien, welche wie in Fig. 1 angedeutet bei einem Punkt A* die volle Oeffnung aₒ der Leitschaufelstellung erreicht haben und noch Reserve bezüglich Laufschaufelverstellung zwischen ϕ * und ϕ 100 % aufweisen. Wenn soviel Wasser anfällt, dass der Betrieb rechts von einem solchen Punkt A* erfolgen kann, ist der Wirkungsgrad in der Regel weniger wichtig als die maximal erreichbare Leistung. Da bei zu grossem Laufschaufelwinkel ϕ Kavitation einsetzen kann, die im Normalbetrieb vermieden werden soll, wird in einer Messung der Winkel ϕ mit der für diese Fallhöhe grössten Leistung bestimmt. Der Winkel ϕ wird vergrössert bis die Leistung um einen bestimmten Wert ΔP abfällt und dann die Messung abgebrochen. Der Winkel ϕ mit der grössten Leistung oder ein Winkel kurz davor, kann als Grenze für die Laufradöffnung bei der gegebenen Fallhöhe verwendet werden. Für den Fall, dass vom Punkt A* nach rechts kein Maximalwert Pₘₐₓ auftritt, ist anzunehmen, dass der Punkt A* bezüglich Optimum so ungenau vorgegeben ist, dass das gesuchte Maximum links davon liegt und mit einer Verkleinerung vom Schaufelwinkel ϕ gesucht werden muss.

## Patentansprüche

1. Verfahren zur Optimierung des Wirkungsgrades einer Wasserturbine, welche einen Leitapparat mit verstellbaren Leitschaufeln und ein mit einem elektrischen Generator gekoppeltes Laufrad mit verstellbaren Laufschaufeln aufweist, um im Betrieb der Wasserturbine bei gegebener Fallhöhe H mit den Leitschaufeln und Laufradschaufeln einen passenden Wasserstrom Q einzustellen,
wobei in einem 1. Schritt ausgehend von einem Betriebspunkt (A1) einer H₁ = Constant Linie, dem durch die Zuordnung der Stellung von Laufschaufeln und Leitschaufeln ein bestimmter Wasserstrom (Q₁) entspricht, ein Startpunkt (B1) für die gleiche Fallhöhe (H₁) und einen annähernd konstanten Wasserstrom (Q₁) angefahren wird, indem auf einer Eingriffslinie (3) quer zur H₁ = Constant Linie gleichzeitig eine Verkleinerung der Leitschaufelstellung und eine Vergrösserung der Laufschaufelstellung, welche in Verstellprozenten des Verstellbereiches das 1- bis 0,7-fache der Verstellprozente der Leitschaufeln ausmacht, vorgenommen wird, bis eine Verkleinerung um bis zu 10 % des Verstellbereichs der Leitschaufeln erreicht ist, um dort nach einer Beharrungszeit, die vom Generator aufgenommene Leistung (P) zu messen und zu speichern;
wobei in einem 2. Schritt und weiteren Folgeschritten die Eingriffslinie (3) in entgegengesetzter Richtung durchlaufen wird, wobei nach jedem für Leitrad und Laufrad gemeinsamen Verstellschritt in der Grösse von etwa 3 % des Verstellbereiches nach einer Beharrungszeit von etwa 3 Minuten die vom Generator aufgenommene Leistung (P) gemessen und gespeichert wird, bis über den ursprünglichen Betriebspunkt (A1) hinaus eine Vergrösserung um bis zu 10 % des Verstellbereichs der Leitschaufeln erreicht ist;
wobei in einem Auswerteschritt die gemessenen Leistungen verglichen werden, um diejenige Kombination von Leitschaufelstellung und Laufschaufelstellung zu bestimmen, bei der die grösste Leistung (P) an den Generator abgegeben wurde, und um diese Kombination als optimierten Punkt (A_{1'}) einer neuen H_{1'} = Constant-Linie mit verbessertem Wirkungsgrad zuzuordnen;
wobei in einem späteren Schritt die neue Kombination der Schaufelstellungen vom optimierten Punkt (A_{1'}) als Regelvorgabe für das gleichzeitige Verstellen von Leitschaufeln und Laufschaufeln beim Regulieren entlang einer verbesserten H_{1'} = Constant-Linie verwendet wird.

2. Verfahren nach Anspruch 1, dadurch gekennzeichnet, dass für die Fallhöhe (H₁) mit dem Erreichen von weiteren vorläufigen Betriebspunkten (Aₖ, Aₙ), denen andere Wasserströme (Q) und zugehörige Leitschaufel- und Laufradschaufelstellungen entsprechen, weitere optimierte Betriebspunkte (A_{k'}, A_{n'}) ermittelt und gespeichert werden, um Stützpunkte für eine optimierte H1' = Constant-Linie zu bilden.

3. Verfahren nach Anspruch 1 oder 2, dadurch gekennzeichnet, dass für mehrere Fallhöhen (H) mehrere Stützwerte mit optimierten Betriebspunkten (A') bestimmt und gespeichert werden, um ein Netz von Stützwerten für eine optimierte Interpolation von dazwischenliegenden H = Constant-Linien zu bilden.

4. Verfahren nach einem der Ansprüche 1 bis 3, dadurch gekennzeichnet, dass die Durchführung der Optimierung rechnergestützt nach einem Programm und vollautomatisch erfolgt, indem einerseits einem Rechner die Fallhöhe (H) einer betreffenden H = Constant-Linie, die momentane Leitschaufel- und Laufschaufelstellung und die momentane vom Generator abgegebene Leistung in Kenntnis vom Generatorwirkungsgrad und cos (ϕ) als Messwerte zu Verfügung gestellt werden und andererseits der Rechner für den 1. Schritt sowie für den 2. Schritt und weitere Folgeschritte die Verstellgeschwindigkeit und das Verstellgesetz für Leit- und Laufschaufeln sowie die Beharrungszeiten vorgibt und die im Auswerteschritt bestimmte optimale Kombination im Punkt (A_{1'}) als neue Vorgabe für die Steuerung der Turbine entlang einer verbesserten H' = Constant-Linie zu Verfügung stellt.

5. Verfahren nach einem der Ansprüche 1 bis 4, dadurch gekennzeichnet, dass zeitweise Messwerte für den Wasserstrom, z.B. in Form von Spiraldruckmessignalen, erfasst und einem Rechner zu Verfügung gestellt werden, damit diese parallel zu einem durch einen Punkt (A₁) theoretisch vorgegebenen Wasserstrom zur Ueberprüfung des Wirkungsgrades und als Stützwerte für Linien mit gleichem Wasserstrom verwendet werden.

6. Verfahren nach einem der Ansprüche 1 bis 5, dadurch gekennzeichnet, dass das Messignal für die Generatorleistung tiefpassgefiltert wird, indem weder Signale grösser/gleich der herrschenden Netzfrequenz z.B. 50 oder 60 Hz noch Signale einer Frequenz, die grösser ist als das Produkt von Wellendrehfrequenz und Schaufelzahl, hindurchgelassen werden.

7. Verfahren nach einem der Ansprüche 1 bis 6, dadurch gekennzeichnet, dass die vom Generator aufgenommene Leistung (P) aus dem Messignal für die Wirkleistung gewonnen und durch den rechnerischen Einbezug eines Blindleistungssignals korrigiert wird, um den blindleistungsabhängigen Generatorwirkungsgrad zu kompensieren.

8. Verfahren nach einem der Ansprüche 1 bis 7, dadurch gekennzeichnet, dass der 1. Schritt in entgegengesetzter Richtung von einem Punkt (A₁) weg erfolgt, indem eine gleichzeitige Vergrösserung der Leitschaufelstellung und eine Verkleinerung der Laufschaufelstellung stattfindet, während der 2. Schritt und die Folgeschritte auf der gleichen Eingriffslinie (3) zu Werten mit kleinerer Leitschaufelstellung und mit grösserer Laufradschaufelstellung führen.

9. Verfahren nach einem der Ansprüche 4 bis 8, dadurch gekennzeichnet, dass mit dem Rechner eine ereignisgesteuerte Selbstoptimierung von Betriebspunkten (A') vorgenommen wird, indem diese zu vorgegebenen Zeiten, bei Erreichen bestimmter Messwerte, z.B. bei Fallhöhen (H) mit bestimmten Kombinationen von Leitschaufel- und Laufschaufelstellung, bei nicht plausiblen Parameterkombinationen oder bei bestimmten Konstellationen der Zuströmung in Gang gesetzt wird.

10. Verfahren nach einem der Ansprüche 4 bis 8, dadurch gekennzeichnet, dass für eine Schnellermittlung der 1. Schritt sowie der 2. Schritt und die Folgeschritte kontinuierlich mit konstanter Verstellgeschwindigkeit für Leitrad- und Laufradschaufeln abgefahren werden und mit dem Auswerteschritt kombiniert werden, indem die gesamte Bandbreite von etwa ± 10 % der Leitschaufelverstellung in beiden Richtungen auf der Eingriffslinie (3) in weniger als 5 Minuten abgefahren wird und gleichzeitig in das extrem tiefpass-gefilterte Signal der Generatorleistung mit der momentanen Schaufelstellung registriert und mit vorangegangenen Werten auf der Eingriffslinie (3) verglichen wird, um die Lage eines Optimums festzustellen.

11. Verfahren nach einem der Ansprüche 1 bis 7, dadurch gekennzeichnet, dass es für Fallhöhen H, welche beim Erreichen der grössten Leitschaufelstellung an einem Punkt A* eine Laufradstellung ϕ * mit Reserve bezüglich der grössten Laufradstellung ϕ 100 % aufweisen, bei Werten über A* hinaus so fortgesetzt wird, dass bei grösster Leitradstellung schrittweise die Laufradstellung vergrössert und die zugehörige an den Generator abgegebene Leistung ermittelt und gespeichert wird, um die Stellung für die bei dieser Fallhöhe als Maximum abgebbare Leistung für spätere Begrenzungen zu ermitteln.

12. Verfahren zur Optimierung des Wirkungsgrades einer Wasserturbine nach einem der Ansprüche 1 bis 11, dadurch gekennzeichnet, dass ein Rechner die Optimierung durchführt und gleichzeitig den Betrieb der Wasserturbine steuert.

## Claims

1. Method for optimizing the degree of efficiency of a water turbine comprising a guide apparatus with adjustable guide blades and a rotor wheel which is coupled to an electrical generator and which has adjustable rotor blades, in order, in operation of the water turbine with a given height of fall (H), to set a suitable water flow (Q) by the guide blades and the rotor blades, wherein,
- in a first step, starting from an operating point (A1) of an H₁=constant line which corresponds to a particular water flow (Q₁) due to the association of the position of the rotor blades and guide blades, a starting point (B1) for the same height of fall (H1) and for an approximately constant water flow (Q₁) is approached by simultaneously effecting a reduction of the guide blade position and an enlargement of the rotor blade position on a line of action (3) transverse to the H₁=constant line, with the enlargement of the rotor blade position amounting, in adjustment percentages of the adjustment range, to 1 to 0.7 times the adjustment percentages of the guide blades, until a reduction of up to 10% of the adjustment range of the guide blades is achieved in order to measure and to store the power (P) taken up there by the generator after a dwell time;
- wherein, in a second step and in further subsequent steps, the line of action (3) is traversed in the opposite direction, with the power (P) delivered at the generator being measured and stored after each joint adjustment step of the guide wheel and of the rotor wheel of approximately 3% of the adjustment range and after a dwell time of approximately 3 minutes, until an enlargement of up to 10% of the adjustment range of the guide blades is achieved beyond the original operating point (A1) ;
- wherein, in an evaluation step, the powers measured are compared in order determine the particular combination of guide blade position and rotor blade position for which the largest power (P) was delivered at the generator, and in order to associate this combination as an optimized point (A1') to a new H₁'= constant line having an improved degree of efficiency;
- wherein, in a later step, the new combination of the blade positions from the optimized point (A₁') is used as a predetermined control value for the simultaneous adjustment of the guide blades and of the rotor blades for the regulation along an improved H₁'=constant line.

2. Process in accordance with claim 1, characterised in that, for the height of fall (H₁), further optimized operating points (Aₖ',Aₙ') corresponding to other water flows (Q) and associated guide blade and rotor blade positions are determined and stored on reaching further provisional operating points (Aₖ,Aₙ)̵, in order to form supporting points for an optimized H₁'=constant line.

3. Process in accordance with claim 1 or 2, characterised in that a plurality of supporting values with optimized operating points (A') are determined and stored for a plurality of heights of fall (H) in order to form a network of supporting values for an optimized interpolation of H=constant lines lying therebetween.

4. Process in accordance with one of the claims 1 to 3, characterised in that the carrying out of the optimization takes place supported by a computer in accordance with a program and fully automatically by, on the one hand, making available as measurement values to a computer; the height of fall (H) of a relevant H=constant line, the current guide blade and rotor blade positions and the instantaneous power (P) delivered by the generator and cos φ and, on the other hand, by the computer prescribing for the first step, as well as for the second step and further subsequent steps the adjustment speed and the adjustment scheme for the guide blades and the rotor blades and also the dwell times, and making available the optimum combination at the point (A₁') determined in the evaluation step as a new predetermined value for the control of the turbine along an improved H'=constant line.

5. Process in accordance with one of the claims 1 to 4, characterised in that measurement values for the water flow, for instance in the form of spiral pressure measurement signals, are determined periodically and made available to a computer so that these measurement values are used, in parallel with a water flow determined theoretically by a point (A₁), for checking the degree of efficiency and as supporting values for lines with the same water flow.

6. Process in accordance with one of the claims 1 to 5, characterised in that the measurement signal for the generator power is subjected to low-pass filtering by not letting through either signals greater than or the same as the prevailing mains frequency, for instance 50 or 60Hz, or signals of a frequency greater than the product of shaft rotation frequency and blade number.

7. Process in accordance with one of the claims 1 to 6, characterised in that the power (P) taken up by the generator is obtained from the measurement signal for the actual power and is corrected by the computational inclusion of a blind power signal in order to compensate the degree of efficiency of the generator which is dependent on the blind power.

8. Process in accordance with one of the claims 1 to 7, characterised in that the first step takes place in a direction opposite to and away from a point (A₁) in that a simultaneous enlargement of the guide blade position and reduction of the rotor blade position takes place, whereas the second step and the subsequent steps on the same line of action (3) lead to values with a smaller guide blade position and with a larger rotor blade position.

9. Process in accordance with one of the claims 4 to 8, characterised in that an event-controlled self-optimization of operating points (A') is undertaken with the computer by setting this self-optimization in operation at predetermined times when particular measurement values are reached, for instance at heights of fall (H) with particular combinations of guide blade and rotor blade positions, for non-plausible combinations of parameters, or for particular constellations of the inflow.

10. Process in accordance with one of the claims 4 to 8, characterised in that, for a rapid determination, the first step, as well as the second step and the subsequent steps are continuously traversed with constant adjustment speed for the guide wheel blades and for the rotor wheel blades and are combined with the evaluation step in that the entire bandwidth of approximately +/- 10% of the guide blade adjustment is traversed in both directions on the line of action (3) in less than 5 minutes and the signal for the generator power which has been subjected to extreme low-pass filtering is simultaneously registered with the instantaneous blade position and is compared with preceding values on the line of action (3) in order to determine the position of an optimum.

11. Process in accordance with one of the claims 1 to 7, characterised in that for heights of fall H, which, when having reached the largest guide blade position at a point A*, have a rotor position ϕ* with a reserve with respect to the largest rotor position ϕ 100%, the process is continued for values beyond A* in such a manner that, with the largest guide wheel position, the rotor position is increased stepwise and the associated power delivered at the generator is determined and stored in order to determine for later limitations the position for the power which is the maximum deliverable for this height of fall.

12. Process for the optimization of the degree of efficiency of a water turbine in accordance with one of the claims 1 to 11, characterized in that a computer is used for the optimization and simultaneously controls the operation of the water turbine.

## Revendications

1. Procédé pour optimiser le degré d'efficacité d'une turbine à eau qui présente un appareil conducteur avec des aubes directrices déplaçables et une roue mobile accouplée au générateur électrique avec des aubes mobiles déplaçables pour, lors du fonctionnement de la turbine à eau, à une hauteur de chute donnée H, régler avec les aubes directrices et les aubes de roue mobile un flux d'eau Q adapté,
où l'on s'approche lors d'une première étape, en partant d'un point de fonctionnement (A1) d'une H₁ = ligne constante, auquel correspond par l'attribution de la position des aubes mobiles et des aubes directrices un flux d'eau défini (Q₁), d'un point de départ (B1) pour la même hauteur de chute (H₁) et d'un flux d'eau (Q₁) approximativement constant, en exécutant sur une ligne d'action (3) transversalement à la H₁ = ligne constante simultanément une diminution de la position des aubes directrices et un agrandissement de la position des aubes mobiles qui représente en pourcents de déplacement de la zone de déplacement 1 à 0,7 fois les pourcents de déplacement des aubes directrices, jusqu'à ce qu'une diminution allant jusqu'à 10 % de la zone de déplacement des aubes directrices soit atteinte pour y mesurer et stocker après un état stationnaire, la puissance (P) reçue par le générateur ;
ou lors d'une deuxième étape et d'autres étapes subséquentes, la ligne d'action (3) est parcourue dans la direction opposée, où l'on mesure et stocke après chaque pas de déplacement commun à la roue directrice et la roue mobile dans la grandeur d'environ 3 % de la zone de déplacement, après un temps d'état stationnaire d'environ 3 minutes, la puissance (P) reçue par le générateur jusqu'à ce qu'on ait atteint, au-delà du point de fonctionnement initial (A1), un agrandissement jusqu'à 10 % de la zone de réglage des aubes directrices ;
où lors d'une étape d'évaluation, les puissances mesurées sont comparées pour définir la combinaison de la position d'aubes directrices et de la position d'aubes mobiles où la plus grande puissance (P) a été fournie au générateur, et pour associer cette combinaison comme point optimisé (A₁') à une nouvelle H₁' = ligne constante avec un rendement amélioré ;
où lors d'une étape ultérieure, la nouvelle combinaison des positions d'aubes du point optimisé (A₁') est utilisée comme consigne de réglage pour le déplacement simultané d'aubes directrices et d'aubes mobiles lors du réglage le long d'une H₁' = ligne constante améliorée.

2. Procédé selon la revendication 1, caractérisé en ce qu'on détermine et on stocke pour la hauteur de chute (H₁) lorsqu'on atteint d'autres points de fonctionnement provisoires (Aₖ, Aₙ) auxquels correspondent d'autres flux d'eau (Q) et des positions associées d'aubes directrices et d'aubes mobiles, d'autres points de fonctionnement optimisés (Aₖ', Aₙ') pour former des points d'appui pour une H₁' = ligne constante optimisée.

3. Procédé selon la revendication 1 ou 2, caractérisé en ce qu'on détermine et on stocke pour plusieurs hauteurs de chute (H) plusieurs valeurs d'appui avec des points de fonctionnement optimisés (A') pour former un réseau de valeurs d'appui pour une interpolation optimisée de H = lignes constantes se situant entre ceux-ci.

4. Procédé selon l'une des revendications 1 à 3, caractérisé en ce que l'exécution de l'optimisation a lieu à base d'un calculateur selon un programme et entièrement automatique en introduisant d'une part dans un calculateur la hauteur de chute (H) d'une H = ligne constante concernée, la position momentanée des aubes directrices et des aubes mobiles et la puissance momentanée fournie par le générateur, en connaissance du degré d'efficacité du générateur et du cos (ϕ) comme valeurs de mesure, et en ce que d'autre part le calculateur indique pour la première étape ainsi que pour la deuxième étape et pour les étapes suivantes la vitesse de réglage et le principe de réglage pour les aubes directrices et mobiles ainsi que les temps d'état stationnaire et met à disposition la combinaison optimale définie lors de l'étape d'évaluation au point (A₁') comme nouvelle consigne pour la commande de la turbine le long d'une H' = ligne constante améliorée.

5. Procédé selon l'une des revendications 1 à 4, caractérisé en ce que des valeurs de mesure pour le flux d'eau, par exemple sous forme de signaux de mesure de pression hélicoïdale sont saisis temporairement et sont mis à la disposition d'un calculateur pour que celles-ci soient utilisées, parallèlement à un flux d'eau prévu théoriquement à travers un point (A₁) pour la vérification du degré d'efficacité et comme valeurs d'appui pour des lignes ayant le même flux d'eau.

6. Procédé selon l'une des revendications 1 à 5, caractérisé en ce que le signal de mesure pour la puissance du générateur est filtré par un filtre bas, en ne laissant pas passer des signaux supérieurs/égaux à la fréquence de réseau prédominante, par exemple de 50 ou 60 Hz, ni des signaux d'une fréquence qui est plus grande que le produit de la fréquence de rotation d'ondes et du nombre d'aubes.

7. Procédé selon l'une des revendications 1 à 6, caractérisé en ce que la puissance (P) reçue par le générateur est obtenue à partir du signal de mesure de la puissance active et est corrigée en tenant compte lors du calcul d'un signal de puissance apparente pour compenser le degré d'efficacité du générateur dépendant de la puissance apparente.

8. Procédé selon l'une des revendications 1 à 7, caractérisé en ce que la première étape a lieu dans la direction opposée à partir d'un point (A₁) en procédant en même temps à un agrandissement de la position des aubes directrices et à une diminution de la position des aubes mobiles tandis que la deuxième étape et les étapes suivantes sur la même ligne d'action (3) mènent à des valeurs d'une plus petite position d'aubes directrices et d'une plus grande position d'aubes de roue mobile.

9. Procédé selon l'une des revendications 4 à 8, caractérisé en ce qu'on réalise avec le calculateur une auto-optimisation commandée par des événements de points de fonctionnement (A') en mettant en oeuvre celle-ci à des temps prédéfinis, lors de l'atteinte de valeurs de mesure déterminées, par exemple lors de hauteurs de chute (H) avec des combinaisons définies de positions d'aubes directrices et d'aubes mobiles, dans des combinaisons de paramètres non vraisemblables ou lors de constellations définies de l'afflux.

10. Procédé selon l'une des revendications 4 à 8, caractérisé en ce que pour une détermination rapide, la première étape ainsi que la deuxième étape et les étapes suivantes sont exécutées continuellement à une vitesse de déplacement constante pour les aubes de roue directrice et de roue mobile et sont combinées avec l'étape d'évaluation, en ce que toute la largeur de bande d'environ ± 10 % du déplacement des aubes directrices est parcourue dans les deux directions sur la ligne d'attaque (3) en moins de 5 minutes et est enregistrée en même temps dans le signal filtré à une fréquence extrêmement basse par un filtre bas de la puissance du générateur avec la position actuelle des aubes et est comparée avec les valeurs précédentes sur la ligne d'action (3) pour définir la position d'un optimum.

11. Procédé selon l'une des revendications 1 à 7, caractérisé en ce que pour des hauteurs de chute H qui, lors de l'atteinte de la plus grande position d'aubes directrices à un point A* présente une position de roues mobiles ϕ* avec une réserve relativement à la plus grande position de roues mobiles ϕ 100 %, celui-ci est poursuivi à des valeurs supérieures à A* de façon que lors de la plus grande position de roues directrices, la position de roues mobiles est agrandie pas à pas, et la puissance associée transmise au générateur est déterminée et stockée pour définir la position pour la puissance maximale obtenue à cette hauteur de chute pour des délimitations ultérieures.

12. Procédé pour optimiser le degré d'efficacité d'une turbine à eau selon l'une des revendications 1 à 11, caractérisé en ce qu'un calculateur exécute l'optimisation et commande en même temps le fonctionnement de la turbine à eau.
